# EUROPEAN PATENT APPLICATION

(11) **EP 4 276 615 A1**
(43) Date of publication of application: **15.11.2023**
(21) Application number: 21926369.6
(22) Date of filing: 08.12.2021
(51) Int. Cl.: G06F 9/451, G06F 16/958

(54) **LONG PAGE SCREENSHOT CAPTURING METHOD AND ELECTRONIC DEVICE**

(30) Priority: 19.02.2021 CN 202110189021
(71) Applicant: Huawei Technologies Co., Ltd., Shenzhen, Guangdong 518129 (CN)
(72) Inventor: REN, Guofeng, Shenzhen, Guangdong 518129 (CN)
(74) Representative: Epping - Hermann - Fischer
(86) International application number: PCT/CN2021/136526
(87) International publication number: WO 2022/174655

(57) **Abstract**

This application provides a long-page screenshot method and an electronic device, and relates to the field of electronic device technologies. The method includes: displaying a first interface by using a physical display screen of the electronic device, where the first interface is a part of a long page (801); receiving a screenshot operation for the long page (802); in response to the screenshot operation, creating a virtual display screen that can completely display the long page (803); drawing and rendering a second interface based on layout information of the long page under a constraint of a display parameter of the virtual display screen (804); and generating, by using the second interface, a screenshot image including the long page (805). In the method, the virtual screen that can completely display the long page at one moment is created, and the long page is redrawn based on the virtual screen. In this way, a complete screenshot image of the long page can be obtained through one capture based on the redrawn long page.

## Description

This application claims priority to Chinese Patent Application No. 202110189021.2, filed with the China National Intellectual Property Administration on February 19, 2021 and entitled "LONG-PAGE SCREENSHOT METHOD AND ELECTRONIC DEVICE", which is incorporated herein by reference in its entirety.

### TECHNICAL FIELD

This application relates to the field of electronic device technologies, and in particular, to a long-page screenshot method and an electronic device.

### BACKGROUND

With development of electronic devices, an electronic device having a display screen may run a plurality of applications and present different pages. Limited by a size of a physical display screen, some pages are not completely displayed on the physical display screen at one moment and need to be displayed in a scrolling mode. A page that is not completely displayed on the display screen of the electronic device at one moment and needs to be displayed in a scrolling mode may be referred to as a long page.

Sometimes, a user needs a screenshot image of the long page. For example, when sharing a page browsed by the user, the user captures and shares the image of the long page. Currently, a long-page screenshot solution is to separately capture parts of a long page that are displayed on the display screen at different moments, to obtain a plurality of partial images of the long page. Then, the plurality of partial images are stitched together to obtain a complete long-page screenshot. This solution may cause problems such as content overlapping or missing stitching, and long-page screenshot effect is poor.

### SUMMARY

Embodiments of this application provide a long-page screenshot method and an electronic device, so that a complete screenshot of a long page can be captured by using one interface screenshot, thereby achieving good screenshot effect.

According to a first aspect, an embodiment of this application provides a long-page screenshot method, applied to an electronic device having a physical display screen. The method includes: displaying a first interface by using the physical display screen, where the first interface is a part of a long page; receiving a screenshot operation for the long page; in response to the screenshot operation, creating a virtual display screen that can completely display the long page; drawing and rendering a second interface based on layout information of the long page under a constraint of a display parameter of the virtual display screen; and generating, by using the second interface, a screenshot image including the long page.

That is, in the method, the virtual screen that can completely display the long page at one moment is created, and the long page is redrawn based on the virtual screen. In this way, a complete screenshot image of the long page can be obtained through one capture based on the redrawn long page.

In a possible implementation, the layout information includes at least one of the following:
a relative size between different layout elements on the long page, and a relative location between the different layout elements on the long page.

That is, in this implementation, the layout elements on the long page and location relationships between the different layout elements may be obtained, so that the long page can be drawn and rendered.

In a possible implementation, the creating a virtual display screen that can completely display the long page includes: creating a first virtual display screen; drawing and rendering a third interface based on the layout information under a constraint of a display parameter of the first virtual display screen; adjusting, when the third interface is a part of the long page, the display parameter of the first virtual display screen to obtain a second virtual display screen; drawing and rendering a fourth interface based on the layout information under a constraint of a display parameter of the second virtual display screen; and determining, when the long page is completely displayed in the fourth interface, that the second virtual display screen is the virtual display screen that can completely display the long page.

That is, the display parameter of the virtual display screen may be adjusted, so that the virtual display screen that can completely display the long page can be created.

In a possible implementation, the determining, when the long page is completely displayed in the fourth interface, that the second virtual display screen is the virtual display screen that can completely display the long page includes: when the long page is completely displayed in the fourth interface, and the fourth interface displays only the long page, determining that the second virtual display screen is the virtual display screen that can completely display the long page. That is, in this implementation, the virtual display screen that can just enough to completely display the long page may be created.

In a possible implementation, the drawing and rendering a second interface based on layout information of the long page under a constraint of a display parameter of the virtual display screen includes: determining that the fourth interface is the second interface.

That is, in this implementation, when the virtual display screen can completely display the long page, an interface used to measure whether the display parameter of the virtual display screen is appropriate may be directly used as an interface used to obtain the screenshot image.

In a possible implementation, the layout information includes at least one of the following:
an aspect ratio of the long page and a size of the long page.

In a possible implementation, the creating a virtual display screen that can completely display the long page includes: creating a virtual display screen having the aspect ratio of the long page or the size of the long page, to obtain the virtual display screen that can completely display the long page. That is, in this implementation, the virtual display screen that can completely display the long page may be directly created based on the aspect ratio or the size of the long page.

In a possible implementation, the generating, by using the second interface, a screenshot image including the long page includes: storing the second interface in a preset image format, to obtain the screenshot image.

That is, in this implementation, the interface displayed on the virtual display screen may be directly stored as the screenshot image, thereby improving screenshot efficiency.

According to a second aspect, an embodiment of this application provides an electronic device, including a processor, a memory, a transceiver, and a physical display screen. The memory is configured to store computer instructions. When the electronic device runs, the processor executes the computer instructions, so that the electronic device performs the following operations: displaying a first interface by using the physical display screen, where the first interface is a part of a long page; receiving a screenshot operation for the long page; in response to the screenshot operation, creating a virtual display screen that can completely display the long page; drawing and rendering a second interface based on layout information of the long page under a constraint of a display parameter of the virtual display screen; and generating, by using the second interface, a screenshot image including the long page.

In a possible implementation, the layout information includes at least one of the following:
a relative size between different layout elements on the long page, and a relative location between the different layout elements on the long page.

In a possible implementation, the processor executes the computer instructions, so that the electronic device further performs the following operations: creating a first virtual display screen; drawing and rendering a third interface based on the layout information under a constraint of a display parameter of the first virtual display screen; adjusting, when the third interface is a part of the long page, the display parameter of the first virtual display screen to obtain a second virtual display screen; drawing and rendering a fourth interface based on the layout information under a constraint of a display parameter of the second virtual display screen; and determining, when the long page is completely displayed in the fourth interface, that the second virtual display screen is the virtual display screen that can completely display the long page.

In a possible implementation, the processor executes the computer instructions, so that the electronic device further performs the following operation: when the long page is completely displayed in the fourth interface, and the fourth interface displays only the long page, determining that the second virtual display screen is the virtual display screen that can completely display the long page.

In a possible implementation, the processor executes the computer instructions, so that the electronic device further performs the following operation: determining that the fourth interface is the second interface.

In a possible implementation, the layout information includes at least one of the following:
an aspect ratio of the long page and a size of the long page.

In a possible implementation, the processor executes the computer instructions, so that the electronic device further performs the following operation: creating a virtual display screen having the aspect ratio of the long page or the size of the long page, to obtain the virtual display screen that can completely display the long page.

In a possible implementation, the processor executes the computer instructions, so that the electronic device further performs the following operation: storing the second interface in a preset image format, to obtain the screenshot image.

According to a third aspect, an embodiment of this application provides a long-page screenshot apparatus, including units configured to perform the method provided in the first aspect. According to a fourth aspect, an embodiment of this application provides a computer storage medium, including computer software instructions, where the computer software instructions include programs used to implement the method provided in the first aspect.

According to a fifth aspect, an embodiment of this application provides a computer program product, including a program used to implement the method provided in the first aspect.

According to the long-page screenshot method and the electronic device provided in embodiments of this application, the virtual screen that can completely display the long page at one moment is created, and the long page is redrawn based on the virtual screen. In this way, the complete screenshot image of the long page can be obtained through one capture.

### BRIEF DESCRIPTION OF DRAWINGS

FIG. 1 is a schematic diagram of a hardware structure of an electronic device according to an embodiment of this application;
FIG. 2 is a block diagram of a software structure of an electronic device according to an embodiment of this application;
FIG. 3A to FIG. 3C are a flowchart of a long-page screenshot method according to an embodiment of this application;
FIG. 4A is a schematic diagram of an application interface displayed on a display screen of an electronic device according to an embodiment of this application;
FIG. 4B is a schematic diagram of a long page according to an embodiment of this application;
FIG. 5 is a schematic diagram of displaying a screenshot image on a display screen of an electronic device according to an embodiment of this application;
FIG. 6 is a flowchart of a long-page screenshot method according to an embodiment of this application;
FIG. 7A and FIG. 7B are a flowchart of a long-page screenshot method according to an embodiment of this application;
FIG. 8 is a flowchart of a long-page screenshot method according to an embodiment of this application;
FIG. 9 is a schematic block diagram of a long-page screenshot apparatus according to an embodiment of this application; and
FIG. 10 is a schematic block diagram of an electronic device according to an embodiment of this application.

### DESCRIPTION OF EMBODIMENTS

The following describes technical solutions of embodiments of this application with reference to accompanying drawings. It is clear that the described embodiments are merely some but not all of embodiments of this application.

In descriptions of this specification, "an embodiment", "some embodiments", or the like indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

In the descriptions of this specification, terms "first" and "second" are merely intended for description, and shall not be understood as an indication or implication of relative importance or implicit indication of a quantity of indicated technical features. Therefore, a feature limited by "first" or "second" may explicitly or implicitly include one or more features. Terms "include", "comprise", "have", and their variants all mean "include but are not limited to", unless otherwise specifically emphasized in another manner.

For an electronic device, the electronic device may display a specific type of data or content by using one page. For example, weather information may be displayed on one page. For another example, a short message list is displayed on one page. For another example, a message in a dialog box of an instant messaging application is displayed on one page. It may be understood that, when a large amount of data or content needs to be displayed on one page, it is difficult to completely display the page at once or display all parts of the page at the same time limited by a size of a physical display screen of the electronic device. Instead, the page needs to be displayed for many times (for example, the page is displayed in a scrolling mode in response to a sliding gesture operation initiated by a user, or the page is automatically displayed in the scrolling mode). This type of page, to be specific, a page that is not completely displayed on the display screen of the electronic device at one moment and needs to be displayed in the scrolling mode, may be referred to as a long page. In other words, when the user browses the long page, the long page cannot be completely displayed on one screen. Generally, there is a scrollbar to support the user to control scrolling display of the long page by using a sliding gesture operation, or the page automatically scrolls, so as to display different parts of the long page by using the display screen at different moments. A part of the long page refers to one portion of a plurality of portions forming the long page. Different portions of the plurality of portions may be connected but do not overlap, or may be partially overlapped.

Sometimes, the user needs to take a screenshot of the long page browsed by the user to obtain a screenshot image of the long page, so as to store or share the long page browsed by the user to another person.

In one solution, the long page is triggered to display on the display screen in the scrolling mode (one part of the long page is displayed on the display screen at one moment). During scrolling, screenshots are respectively taken on interfaces (or parts of the long page) displayed on the display screen at different moments, to obtain a plurality of screenshot images. Then, a scrolling distance or page repetition height between the plurality of screenshot images is identified by using an image recognition algorithm, and the screenshot images are cropped based on the scrolling distance or the page repetition height, to remove repeated parts, and then the screenshot images are stitched to obtain a complete long-page screenshot. In other words, in this solution, page scrolling needs to be triggered, content displayed on the display screen needs to be captured for a plurality of times, to obtain a plurality of images, and the plurality of images are stitched to obtain the complete long-page screenshot.

This solution mainly involves two technical points: scrolling screenshot and image stitching. Page scrolling may be classified into automatic scrolling and manual scrolling.

For automatic scrolling, page scrolling is triggered by injecting a simulated touch event to take a plurality of screenshots during scrolling. A distance of each scrolling is uncertain, and a screenshot during scrolling depends on a sliding response parameter setting of a page. Therefore, a repetition location between two adjacent screenshots is uncertain. As a result, the stitching is difficult, and the stitched image may overlap or lose content. In addition, scrolling speeds of different pages are different, page lengths are different, and duration of an entire screenshot process is different. Therefore, screenshot experience of the user is inconsistent. For example, the entire screenshot process is long, and the user needs to wait for a long time. As a result, screenshot experience of the user is poor.

For manual scrolling, prompt information and a function button are displayed on the display screen, so as to guide the user to manually trigger page scrolling, so as to take a plurality of screenshots during scrolling. In the entire screenshot process, the user needs to perform a plurality of intervention operations, and the operations are complex. As a result, screenshot experience of the user is also poor.

Image stitching depends on an image stitching algorithm. A recognition error may occur in the image stitching algorithm, especially when different pages have similar items or content, and further, content overlap or content loss may occur in the stitched image.

Embodiments of this application provide a screenshot method, so that a complete long-page screenshot image may be obtained through one capture when displaying in a scrolling mode is not required, thereby avoiding content overlap or content loss in the screenshot image caused by taking a long scrolling screenshot. In addition, time required for screenshot is shortened and long-page screenshot experience of a user is improved. A long page may be a scrollable long page. To be specific, an electronic device 100 may perform page scrolling in response to an operation of the user, to display different parts of the long page. Alternatively, the electronic device 100 may automatically scroll to display the different parts of the long page.

The screenshot method provided in embodiments of this application may be applied to the electronic device 100. The electronic device 100 may be a portable electronic device, for example, a mobile phone, a tablet computer, a digital camera, a personal digital assistant (personal digital assistant, PDA), a wearable device, or a laptop (laptop) computer. Example embodiments of the portable electronic device include, but are not limited to, a portable electronic device running iOS^{®}, Android^{®}, Microsoft^{®}, or another operating system. The portable electronic device may alternatively be another portable electronic device, for example, a laptop (laptop) computer with a touch-sensitive surface (for example, a touch panel). It should be further understood that, in some other embodiments of this application, the electronic device 100 may alternatively be a desktop computer with a touch-sensitive surface (for example, a touch panel), but not the portable electronic device. A type of the electronic device 100 is not specifically limited in embodiments of this application.

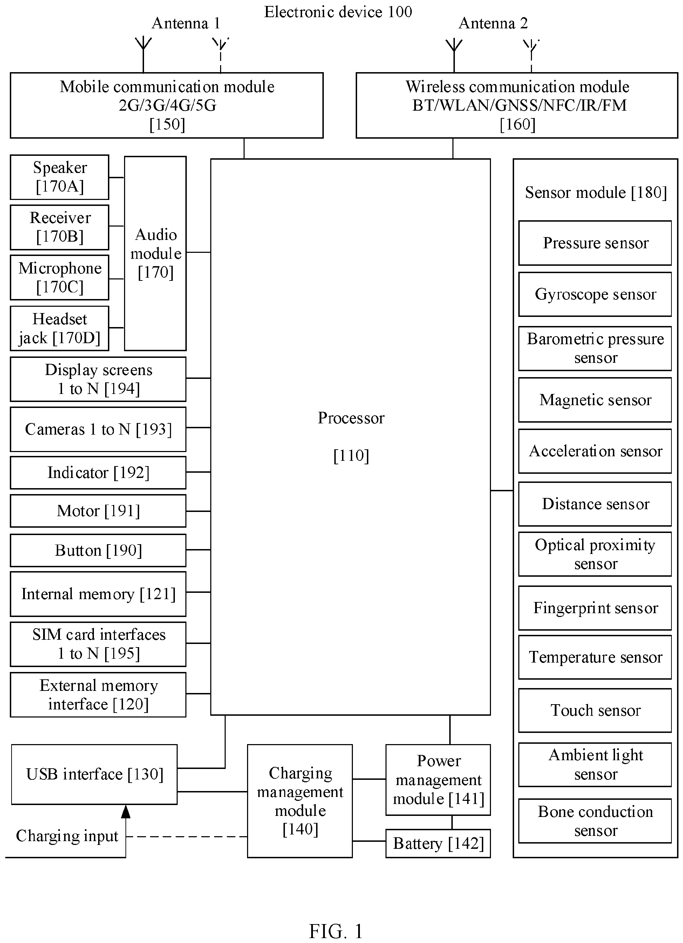

FIG. 1 is a schematic diagram of a structure of the electronic device 100 according to an embodiment of this application.

As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a USB interface, and/or the like.

The charging management module 140 is configured to receive charging input from a charger. The charger may be a wireless charger or a wired charger. The charging management module 140 supplies power to the electronic device by using the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display screen 194, the camera 193, the wireless communication module 160, and the like. In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The wireless communication module 160 may provide a wireless communication solution that is applied to the electronic device 100 and that includes a wireless local area network (wireless local area network, WLAN) (for example, Wi-Fi network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. In some embodiments, the Bluetooth may be Bluetooth low energy (Bluetooth low energy, BLE).

The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In this embodiment of this application, the wireless communication module 160 may support a Wi-Fi NAN. The electronic device 100 may receive, by using the wireless communication module 160, a discover beacon frame sent by a master device in the Wi-Fi NAN, to learn of arrival time of an activity time window of the Wi-Fi NAN, so that the electronic device 100 wakes up when the activity time window arrives, and exchanges information with another device in the Wi-Fi NAN through a Wi-Fi interface. The wireless communication module 160 may further receive a broadcast message sent by another device in the Wi-Fi NAN, and determine a target device and a relay device based on the broadcast message.

The electronic device 100 may implement a display function by using the GPU, the display screen 194, the application processor, and the like. The GPU is a microprocessor for image processing, and is connected to the display screen 194 and the application processor. The display screen 194 is configured to display an image, a video, and the like. The display screen 194 includes a display panel. The display panel may be an LCD, an OLED, an AMOLED, an FLED, a Mini-LED, a Micro-LED, a Micro-OLED, a QLED, or the like. In some embodiments, the electronic device 100 may include one or N display screens 194, where N is a positive integer greater than 1.

The electronic device 100 may implement a photographing function by using the ISP, the camera 193, the video codec, the GPU, the display screen 194, the application processor, and the like. The electronic device 100 may implement an audio function, for example, music playing and recording, by using the audio module 170, the speaker 170A, the receiver 170B, the microphone 170C, the headset jack 170D, the application processor, and the like. The button 190 includes a power button, a volume button, and the like. The button 190 may be a mechanical button, or may be a touch button. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as conversation and data communication.

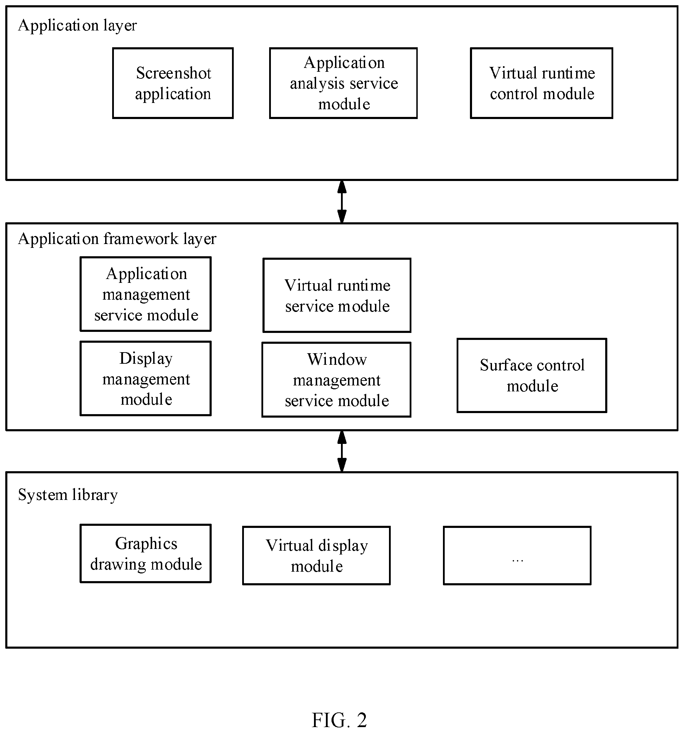

A software system of the electronic device 100 may use a layered architecture, an event-driven architecture, a microkernel architecture, a micro service architecture, or a cloud architecture. In this embodiment of this application, with reference to FIG. 2, an Android^{®} (Android^{®}) system with a layered architecture is used as an example to describe a software structure of the electronic device 100.

In the layered architecture, software is divided into several layers, and each layer has a clear role and task. The layers communicate with each other through a software interface. In some embodiments, as shown in FIG. 2, the layered architecture may include three layers: an application (application) layer, an application framework (framework) layer, and a system library from top to bottom.

As shown in FIG. 2, the application layer may include a screenshot (screenshot) application, an application analysis service (analysis service) module, a virtual runtime control (virtual runtime control) module, and the like.

The application framework layer may include an application management service (application management system, AMS) module, a virtual runtime service (virtual runtime service) module, a display management (DisplayManager) module, a window management service (window management system, WMS) module, a surface control (surface control) module, and the like. The system library may include a graphics drawing (SurfaceFlinger) module, a virtual display (virtual display) module, and the like.

For example, a kernel layer (not shown) may be further set below the system library. The kernel layer may include various types of drivers, for example, a display driver, a camera driver, an audio driver, and a sensor driver.

The foregoing layers are not limited to including only the foregoing modules or applications, and may further include other modules or applications. For example, the application layer may further include applications such as Camera, Calendar, Call, and Messages. The application framework layer may further include a telephone manager, a resource manager, a notification manager, and the like. The system library may further include a media library (Media Library), a three-dimensional graphics processing library (for example, OpenGL ES), a two-dimensional graphics engine (for example, SGL), and the like.

Different modules or applications at a same layer and modules or applications at different layers may invoke each other by using a predefined application programming interface (application programming interface, API) or function.

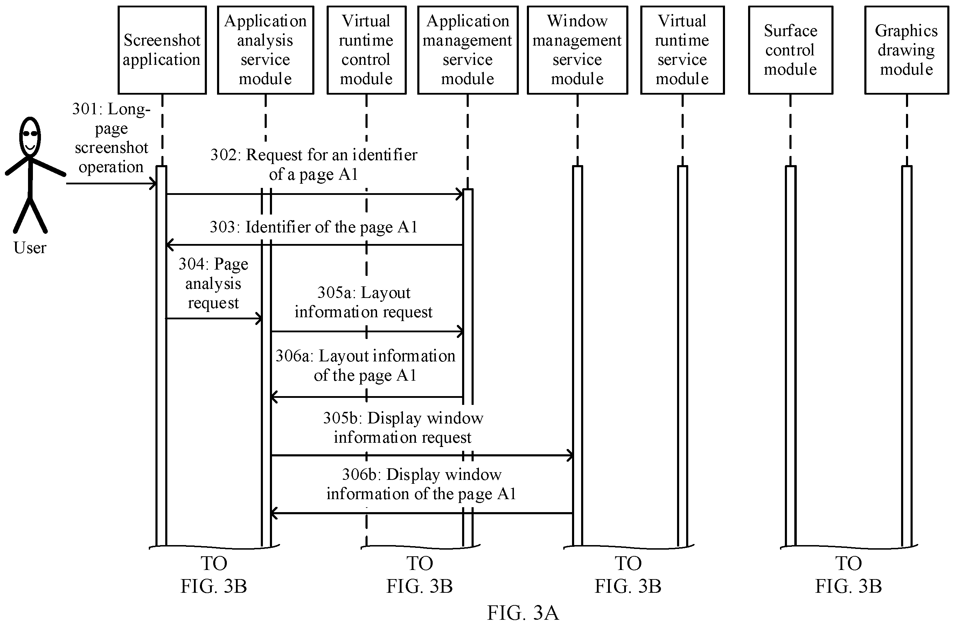

Next, with reference to FIG. 3A to FIG. 3C, a function of the module or the application shown in FIG. 2 is described by using an example.

The screenshot application may be configured to detect or receive a long-page screenshot operation initiated by the user. It may be understood that a screenshot operation may be classified into a long-page screenshot operation and a screenshot operation of a current interface. The screenshot operation of the current interface is to capture only an interface currently displayed on the display screen of the electronic device 100. The long-page operation is for a long page, and is used to completely capture a long page to which the interface currently displayed on the display screen belongs.

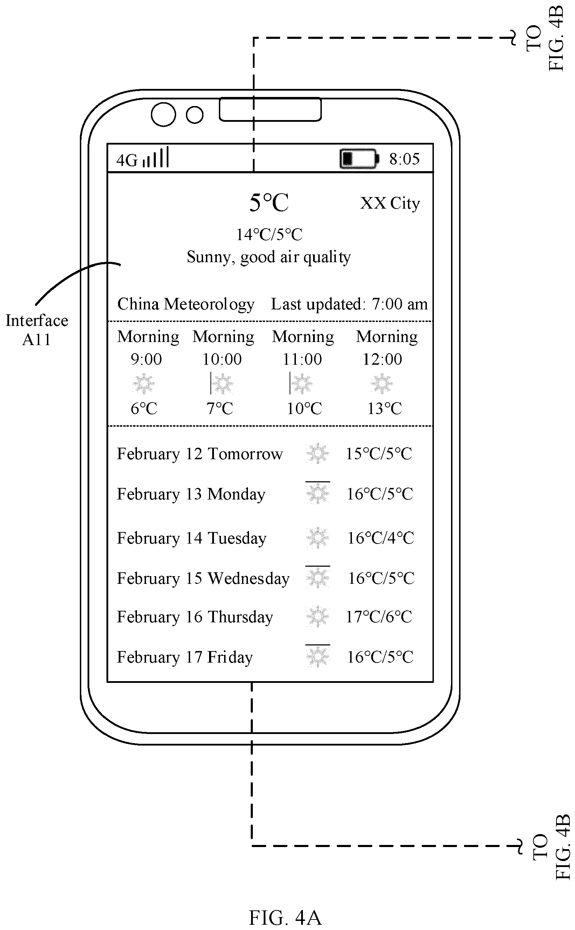

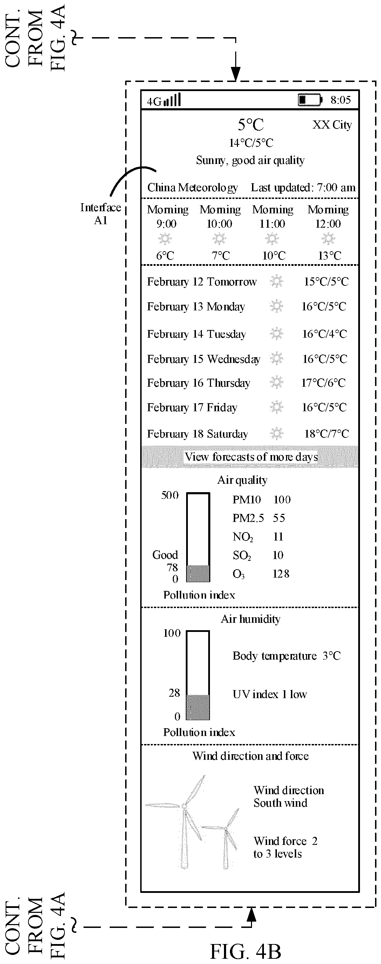

Next, with reference to FIG. 4A and FIG. 4B, a long page A1 and a long-page screenshot are described by using an example. For ease of description, the long page A1 may also be referred to as a page A1.

An interface A11 shown in FIG. 4A is a part of the page A1 shown in FIG. 4B. Limited by a size of the display screen of the electronic device 100, the electronic device 100 can display only one part of the page A1 at one moment, for example, the interface A11.

When the display screen of the electronic device 100 displays the interface A11, if the screenshot application detects or receives a screenshot operation of a current interface, the electronic device 100 may capture the interface A11, to obtain a screenshot image of the interface A11. If the screenshot application detects or receives a long-page screenshot operation, the electronic device 100 may capture the page A1, to obtain a screenshot image including the page A1.

In some embodiments, for the electronic device 100 having a touchscreen, the long-page screenshot operation may be a preset gesture operation, for example, an "S"-shaped gesture operation. In some embodiments, the long-page screenshot operation may specifically be a preset voice instruction, for example, "long-page screenshot".

Return to FIG. 3A to FIG. 3C. When the display screen of the electronic device 100 is currently displaying the interface A11 or another part of the page A1, if the screenshot application detects or receives the long-page screenshot operation in step 301, the screenshot application may perform step 302 to send a request for an identifier of the page A1 to the application management service module. The request is used to request the identifier of the page A1. As described above, the page A1 is a page to which the interface currently displayed on the display screen belongs. The identifier of the page A1 specifically refers to the page to which the interface currently displayed on the display screen belongs. For convenience, when the display screen of the electronic device 100 is currently displaying the interface A11 or another part of the page A1, the page to which the interface currently displayed on the display screen belongs is referred to as the page A1.

The application management service module may respond to the request for the identifier of the page A1, determine the page to which the currently displayed interface belongs, and further determine an identifier of the page to which the currently displayed interface belongs, in other words, determine the identifier of the page A1. In an example, the identifier of the page A1 may be an identifier of an application (application, APP) to which the page A1 belongs, for example, a package name (package name). In other words, in this example, the identifier of the application to which the page A1 belongs or the identifier of the application to which the currently displayed interface belongs may be used as the identifier of the page A1. In an example, the identifier of the page A1 may be preset (for example, set by an application developer) identifier information used to distinguish the page A1 from another page, for example, a number.

The application management service module may perform step 303 to send the identifier of the page A1 to the screenshot application. When or after receiving the identifier of the page A1, the screenshot application may perform step 304 to send a page analysis request to the application analysis service module, where the page analysis request includes the identifier of the page A1. The application analysis service module may respond to the page analysis request, and perform 305a to send a layout information request to the application management service module, where the layout information request may include the identifier of the page A1. When or after receiving the layout information request, the application management service module may extract the identifier of the page A1 from the layout information request, and obtain layout information of the page A1 based on the identifier. The layout information of the page A1 may include layout elements for forming the page A1 or for displaying on the page A1. It may be understood that a page may include visual interface elements such as an icon, a button, a menu, a tab, a text box, a dialog box, a status bar, a navigation bar, and a widget (Widget). These visual interface elements may be referred to as layout elements or controls.

In an illustrative example, the layout information may specifically include sizes and shapes of the layout elements, and a location relationship between different layout elements or a distance between the different layout elements. In other words, in this example, the layout information includes an absolute size of the layout elements, and an absolute distance between the different layout elements. That is, when a layout element is displayed on a page, a size is fixed, and a distance between different layout elements is fixed.

In some illustrative examples, the layout information of the page A1 may specifically include a size of the page A1. The size of the page A1 may be determined based on a size between the layout elements on the page A1 and the location relationship or distance between the different layout elements. A size of a page may be a vertical length and a horizontal width of the page.

In an illustrative example, the layout information of the page A1 may specifically include a relative size between the different layout elements, and a relative location relationship or relative distance between the different layout elements. That is, when the different layout elements are displayed on the page, the value relationship or a size ratio between the different layout elements are fixed, and a ratio between a vertical location relationship and a horizontal location relationship between the different layout elements is fixed. In other words, a ratio between a vertical distance and a horizontal distance between the different layout elements is fixed.

In an illustrative example, the layout information of the page A1 may specifically include an aspect ratio of the page A1. The aspect ratio may be determined based on the relative size between the different layout elements on the page A1 and the relative location relationship or relative distance between the different layout elements.

In an illustrative example, the layout information of the page A1 may include resolution of the page A1 and the size of the page A1.

Still refer to FIG. 3A to FIG. 3C. The application management service module may perform step 306a to send the layout information of the page A1 to the application analysis service module.

The application analysis service module may further perform step 305b to send a display window information request to the window management service module, where the request may include the identifier of the page A1. When or after receiving the display window information request, the window management service module may extract the identifier of the page A1 from the request, and obtain display window information of the page A1 based on the identifier. The display window of the page A1 refers to a display window or a display area used to display the page A1.

It may be understood that the display screen of the electronic device 100 may include one or more display windows. The display window may also be understood as a display area. Different display windows or display areas are used to display a corresponding page or a part of the corresponding page (in a case that a window cannot completely display a corresponding page or displays a part of the window, that is, the page is a long page). For ease of description, a display area or a display window allocated by the electronic device 100 to the page A1 currently may be referred to as a display window B 1. For example, the display window B1 may be one of a plurality of display windows displayed on the display screen of the electronic device 100. For example, a size of the display window B1 may be equal to or slightly less than the size of the physical display screen of the electronic device 100. That the size of the display screen window B1 is slightly less than the size of the physical display screen of the electronic device 100 means that the physical display screen of the electronic device 100 further displays a system-level interface element, for example, a status bar may be displayed at the top of the physical display screen and/or a virtual button may be displayed at the bottom of the display area. The status bar may include an operator name (for example, China Mobile^{∘,R}), a signal bar indicating signal strength, a remaining battery level, and the like. The virtual button may include a virtual back button, a virtual home button, and the like. The display window information may be a display parameter of the display window. In some embodiments, the display parameter of the display window may include a size of the display window. In an example, the display parameter of the display window may specifically refer to an aspect ratio of the display window. In an example, the display parameter of the display window may specifically refer to a vertical length and a horizontal width of the display window. In some embodiments, the display parameter of the display window may include resolution of the display window.

Still refer to FIG. 3A to FIG. 3C. The window management service module may perform step 306b to send the display window information of the page A1 to the application analysis service module. When or after obtaining the layout information of the page A1 and the display window information of the page A1, the application analysis service module may perform step 307 to determine whether the page A1 is a long page. Specifically, it may be determined, based on the layout information of the page A1 and the display window information of the page A1, whether the display window of the page A1 can completely display the page A1 at one moment. If the display window of the page A1 cannot completely display the page A1 at one moment, but can display only one part of the page A1, it may be determined that the page A1 is a long page. Otherwise, it may be determined that the page A1 is not a long page.

In an illustrative example, the layout information of the page A1 may include the absolute size between the layout elements on the page A1 and the absolute distance between the different layout elements. Alternatively, the layout information of the page A1 may include the size of the page A1. The display window information of the page A1 may include a vertical length and a horizontal width of the display window B1. Therefore, the layout information of the page A1 and the display window B1 can be compared in vertical and/or horizontal directions, and therefore whether the page A1 is a long page can be determined.

In an illustrative example, the layout information of the page A1 may include the relative size between the different layout elements on the page A1 and the relative location relationship or relative distance between the different layout elements. Alternatively, the layout information of the page A1 may include the aspect ratio of the page A1. The display window information of the page A1 may include an aspect ratio of the display window B1. Therefore, the layout information of the page A1 and the display window B1 can be compared in the vertical and/or horizontal directions, and therefore whether the page A1 is a long page can be determined.

In an illustrative example, the layout information of the page A1 may include the resolution of the page A1 and the size of the page A1. The display window information of the page A1 may include resolution and the size of the display window B1. Therefore, it may be determined whether the page A1 with the resolution included in the layout information can be completely displayed in the display window B1, and whether the page A is a long page can be further determined.

When or after it is determined that the page A1 is a long page, the application analysis service module may perform step 308 to send long-page indication information to the screenshot application, so that the screenshot application can learn that the page A1 is a long page. For example, the long-page indication information may include the identifier of the page A1, to indicate that the long-page indication information indicates that the page A1 is a long page. When or after learning that the page A1 is a long page, the screenshot application may perform step 309 to send a page redrawing request to the virtual runtime control module, so as to indicate the virtual runtime control module to redraw the page A1. For example, the page redrawing request may include the identifier of the page A1, so that the virtual runtime control module can learn that a page that needs to be redrawn is the page A1.

The virtual runtime control module may perform step 310 to send a virtual display screen creation request to the virtual runtime service module, so as to indicate the virtual runtime service module to create a virtual display screen. The virtual display screen is a display screen that does not exist physically, but a virtual display (virtual display) that is created by simulating a function of the physical display screen and has a set display parameter. For example, a display parameter of a display screen or a virtual display screen may include an aspect ratio of the display screen or the virtual display screen, and the like. For example, the display parameter of the display screen or the virtual display screen may include a vertical length, a horizontal width, and the like of the display screen or the virtual display screen.

The virtual runtime service module may create a virtual display screen in response to the virtual display screen creation request. The virtual runtime service module may perform step 311 to send a display parameter of the created virtual display screen to the virtual runtime control module. The virtual runtime control module may perform step 312 to perform page redrawing. Specifically, the page A1 may be redrawn based on the layout information of the page A1 under a constraint of the display parameter of the virtual display screen received in step 311.

For example, the virtual runtime control module may obtain the layout information of the page A1 from the application management service module or the application analysis service module. In one example, the page redrawing request sent in step 309 may include the identifier of the page A1. Therefore, the virtual runtime control module may learn of the identifier of the page A1, and learn that the page redrawing request is used to request to redraw the page A1. Further, the virtual runtime control module may obtain the layout information of the page A1 from the application management service module or the application analysis service module based on the identifier of the page A1.

The virtual runtime control module may redraw the page A1 based on the layout information of the page A1 under the constraint of the display parameter of the virtual display screen. Refer to a process in which an application draws a page based on page layout information of the application under a constraint of a display screen of an electronic device in the conventional technology. However, for ease of understanding, this process is briefly introduced in this specification.

The virtual runtime control module may determine, based on the display parameter of the virtual display screen, whether the virtual display screen can completely display the page A1 at a same moment. If the display parameter of the virtual display screen may support complete display of the page A1 at the same moment, the virtual runtime control module may draw and render the entire page A1, to obtain a new interface. The new interface includes the page A1. In other words, the new interface includes interface elements on the page A1.

If the display parameter of the virtual display screen may not support complete display of the page A1 at the same moment, in other words, the virtual display screen cannot completely display the page A1 at the same moment, the virtual runtime control module draws and renders a part of the page A1. Display of the part may be supported by the display parameter of the virtual display screen. In other words, the display parameter of the virtual display screen can support displaying only the part at one moment.

For example, the aspect ratio of the virtual display screen included in the display parameter of the virtual display screen may be set to 3:1, and the aspect ratio of the page A1 included in the layout information of the page A1 may be set to 9:1. It may be determined that the virtual display screen can display only one third of the size of the page A1 at a same moment. Therefore, the virtual runtime control module may first draw and render one third of the size of the page A1. In other words, a drawn and rendered interface is one third of the page A1 or the drawn and rendered interface displays one third of the page A1.

For another example, the vertical length of the virtual display screen included in the display parameter of the virtual display screen may be set to 3 inches, and the horizontal width may be set to 1 inch. In addition, a vertical length of the page A1 included in the layout information of the page A1 is 9 inches, and a horizontal width is 1 inch. It may be determined that the virtual display screen can display only one third of the size of the page A1 at the same moment. Therefore, the virtual runtime control module may first draw and render one third of the size of the page A1. In other words, a drawn and rendered interface is one third of the page A1 or the drawn and rendered interface displays one third of the page A1.

For a specific process of drawing and rendering the page based on the layout information of the page under the constraint of the display parameter of the display screen, refer to the description in the conventional technology. Details are not described herein again.

In some embodiments, still refer to FIG. 3A to FIG. 3C, if the interface obtained through page redrawing in step 312 is still a part of the page A1, in other words, the display parameter sent in step 311 does not support complete display of the page A1 at a same moment, the virtual runtime control module may perform step 313 to send a display parameter adjustment request to the virtual runtime service module. The virtual runtime service module may adjust the display parameter of the virtual display screen in response to the display parameter adjustment request, and send an adjusted virtual parameter to the virtual runtime control module in step 315. Then, the virtual runtime control module may redraw the page A1 based on the adjusted display parameter, and determine whether a drawn and rendered page or interface is a part of the page A1. When the drawn and rendered interface is still a part of the page A1 (in other words, the page A1 is not completely displayed on the drawn and rendered interface), step 313 to step 316 may be repeatedly performed until an adjusted display parameter supports complete display of the page A1 at a same moment. For example, step 317 may be performed to determine that the page A1 is completely displayed on the virtual display screen.

The drawn and rendered page in step 312 and step 316 may also be referred to as an interface.

In some embodiments, the layout information of the page A1 includes the aspect ratio of the page A1. The virtual display screen creation request sent in step 310 may include the aspect ratio of the page A1. When creating the virtual display screen, the virtual runtime service module may set the display parameter of the virtual display screen based on the aspect ratio of the page A1, so that the created virtual display screen can completely display the page A1 at a same moment. For example, the aspect ratio included in the layout information of the page A1 may be set to 9:1, and the aspect ratio of the virtual display screen created by the virtual runtime service module is also 9:1. Therefore, the page A1 can be completely displayed on the virtual display screen. In this embodiment, in step 312, the redrawn and rendered interface may completely display the page A1. In this case, there is no need to perform subsequent steps 313 to 316.

In some embodiments, the layout information of the page A1 includes the size of the page A1. The virtual display screen creation request sent in step 310 may include the size of the page A1. When creating the virtual display screen, the virtual runtime service module may set the display parameter of the virtual display screen based on the size of the page A1, so that the created virtual display screen can completely display the page A1 at a same moment. For example, the vertical length of the page A1 may be set to be 9 inches and the horizontal width may be set to be 1 inch. In this case, the vertical length of the virtual display screen created by the virtual runtime service module is greater than or equal to 9 inches, and the horizontal width is greater than or equal to 1 inch. Therefore, the page A1 can be completely displayed on the virtual display screen. In this embodiment, in step 312, the redrawn and rendered interface may completely display the page A1. In this case, there is no need to perform subsequent steps 313 to 316.

In some embodiments, the virtual runtime control module may perform step 317 to determine that the page A1 is completely displayed on the virtual display screen. Then, the interface that completely displays the page A1 and that is drawn and rendered in step 312 or step 316 is stored in a preset image format (for example, bitmap or JPEG), to obtain a screenshot image of the page A1. For a specific image format of the screenshot image, refer to the description in the conventional technology. Details are not described herein again.

In some embodiments, the virtual runtime control module may perform step 317 to determine that the page A1 is completely displayed on the virtual display screen. Then, step 318 may be performed to send a complete screenshot request to a graphics control module. The complete screenshot request is used to capture an interface displayed on the virtual display screen. The graphics control module may perform step 319 to send an image synthesis request to the graphics drawing module, so as to request the graphics drawing module to synthesize a screenshot image based on the interface that completely displays the page A1 and that is drawn and rendered in step 312 or step 316. For example, the interface, a status bar, and the like may be combined, to obtain or simulate an interface displayed on a real display screen. A screenshot is taken on the combined interface, to obtain the screenshot image. For a specific process of taking a screenshot, refer to the description in the conventional technology. Details are not described herein again.

The graphics drawing module may perform step 320 to send the screenshot image to the screenshot application, so as to display or edit the screenshot image to the user.

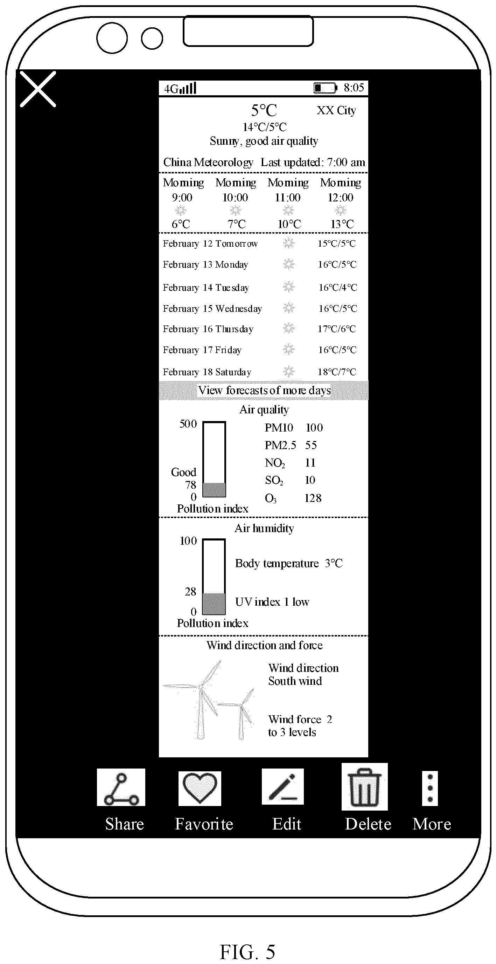

In some embodiments, capturing the long page shown in FIG. 4B is used as an example. When or after receiving the screenshot image, the screenshot application may display an interface shown in FIG. 5. Therefore, the user may perform an operation such as sharing, collecting, or editing on the screenshot image.

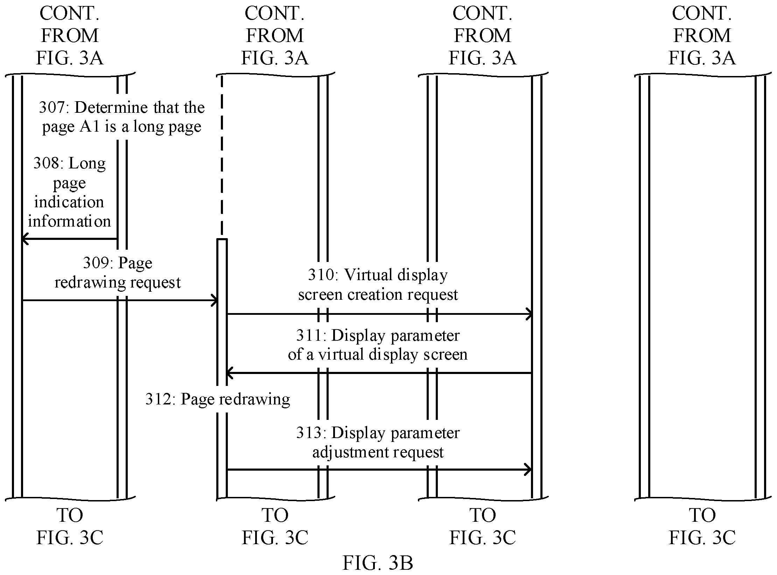

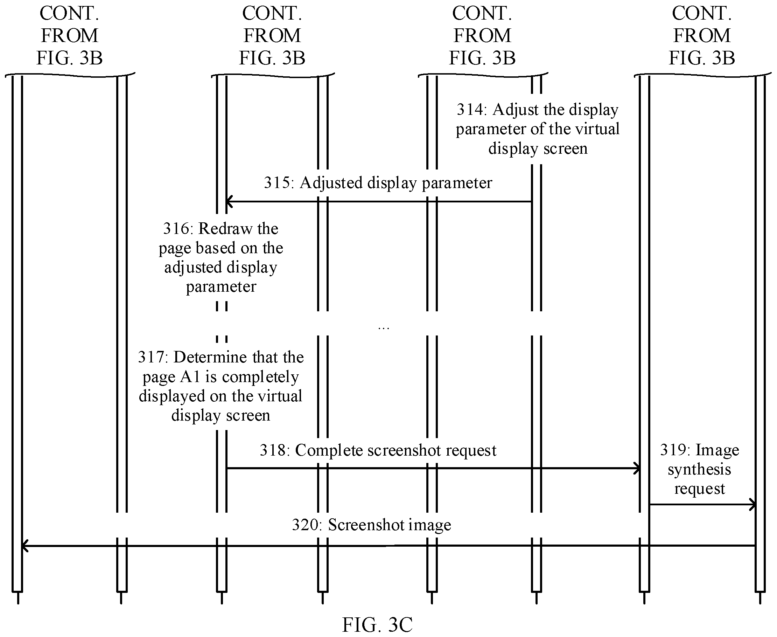

The foregoing describes a long-page screenshot method provided in embodiments of this application by using an example with reference to a software architecture shown in FIG. 2, but is not limited to the software architecture shown in FIG. 2. In another software architecture, the electronic device 100 may also implement the long-page screenshot method shown in FIG. 3A to FIG. 3C. It may be understood that functions of modules in the software architecture shown in FIG. 2 are implemented by the processor of the electronic device 100 by running computer instructions. In another software architecture, the method embodiment shown in FIG. 3A to FIG. 3C may be implemented by adaptive modification of related computer instructions. Alternatively, according to the embodiment shown in FIG. 3Ato FIG. 3C, computer instructions are programmed. Therefore, a specific implementation process of a screenshot method under another software architecture is not described in detail in this specification.

According to the long-page screenshot method provided in embodiments of this application, the virtual screen that can completely display the long page at one moment is created, and the long page is redrawn based on the virtual screen. In this way, the complete screenshot image of the long page can be obtained through one capture. Therefore, problems such as image stitching overlap and disorder in scrolling screenshots are avoided, and long screenshot experience of the user is improved.

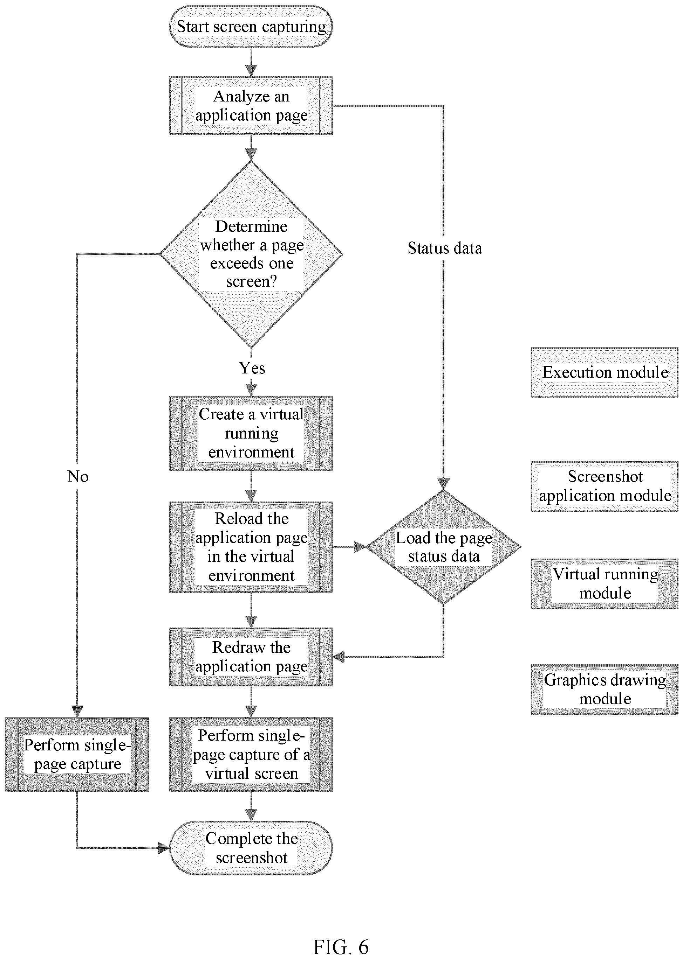

Refer to FIG. 6. An embodiment of this application provides a long-page screenshot method. The method may be performed by an electronic device 100. As shown in FIG. 6, the method includes the following steps.

A screenshot application module can start screen capturing.

An execution module performs application page analysis, and may determine whether a page exceeds one screen. If the page does not exceed one screen, a graphics drawing module may perform single-page capture to complete the screenshot.

If the page exceeds one screen, a virtual running module may create a virtual running environment, and then load the application page in the virtual running environment. The virtual running module may receive status data from the execution module. The virtual running module may further determine, based on the status data received from the execution module and the page loaded in the virtual running environment, whether the page exceeds one screen in the virtual running environment. If the page does not exceed one screen, application page redrawing can be performed. Then, the graphic drawing module may perform single-page capture of an interface displayed on a virtual screen, so as to complete the screen capturing.

According to the screenshot method provided in this embodiment of this application, a complete screenshot of a scrollable long page can be obtained, and problems such as different scrolling effect, image stitching overlap, or disorder do not occur, thereby improving user experience. In other words, according to the solution provided in this embodiment of this application, when a screenshot is taken on the scrollable long page, a display synthesis technology is directly used without relying on page scrolling and stitching, so that page information is completely captured, and problems such as different scrolling responses and stitching disorder are avoided.

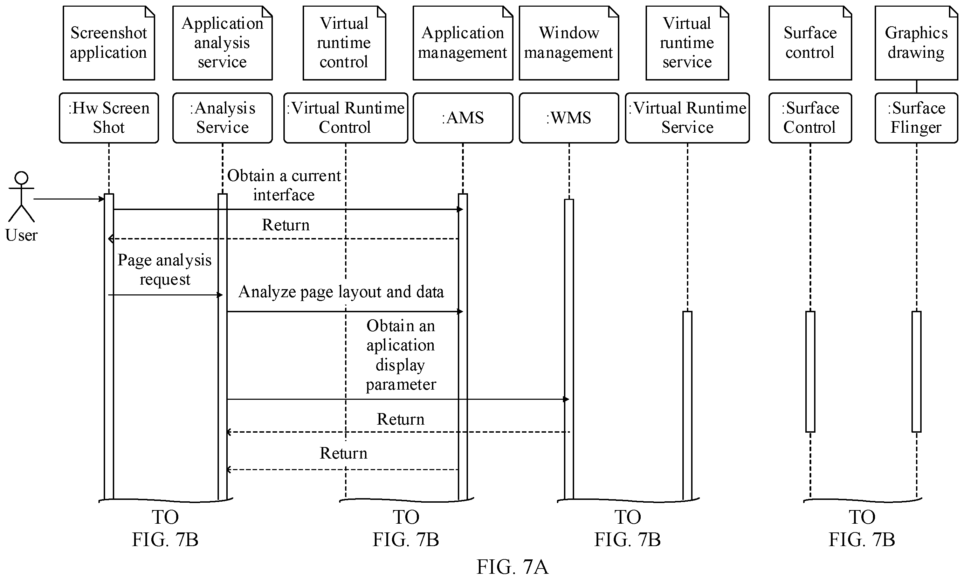

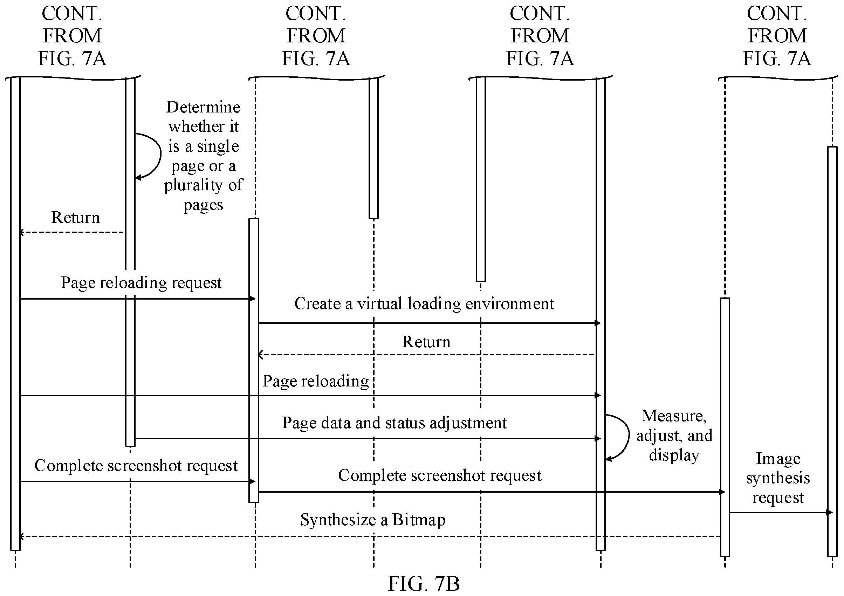

An embodiment of this application provides a long-page screenshot method shown in FIG. 7A and FIG. 7B. The method may be performed by an electronic device 100. In the method, a virtual application loading environment may be created, an application page may be loaded into a virtual running environment, a display page of an application may be started and loaded in the virtual running environment, and a height may be adjusted based on a measurement result of displayed content of the application page, so that the application page can be displayed in a complete layout in the running environment. A complete screenshot of the application is synthesized and redrawn based on the displayed content in the virtual running environment.

The method may include the following steps.
1: A user triggers a screenshot of a scrollable long page.
2: Obtain page information of the application.
3: Start a page analysis service and initiate a page analysis request, to request an AMS and a WMS to obtain layout display and status information of the page.
4: Initiate a page loading request to a virtual runtime control module, create the virtual running environment of the application page by using a virtual runtime service, and load the page and a display status and a parameter of the page.
5: Adjust a display size of the page appropriately based on measurement and drawing conditions of the page, to redraw the page with a proper size.
6: Initiate a complete screenshot request and use a graphics drawing module to synthesize a virtual screen screenshot image.

According to the screenshot method provided in this embodiment of this application, a complete screenshot of the scrollable long page can be obtained, and problems such as different scrolling effect, image stitching overlap, or disorder do not occur, thereby improving user experience. In other words, according to the solution provided in this embodiment of this application, when a screenshot is taken on the scrollable long page, a display synthesis technology is directly used without relying on page scrolling and stitching, so that page information is completely captured, and problems such as different scrolling responses and stitching disorder are avoided.

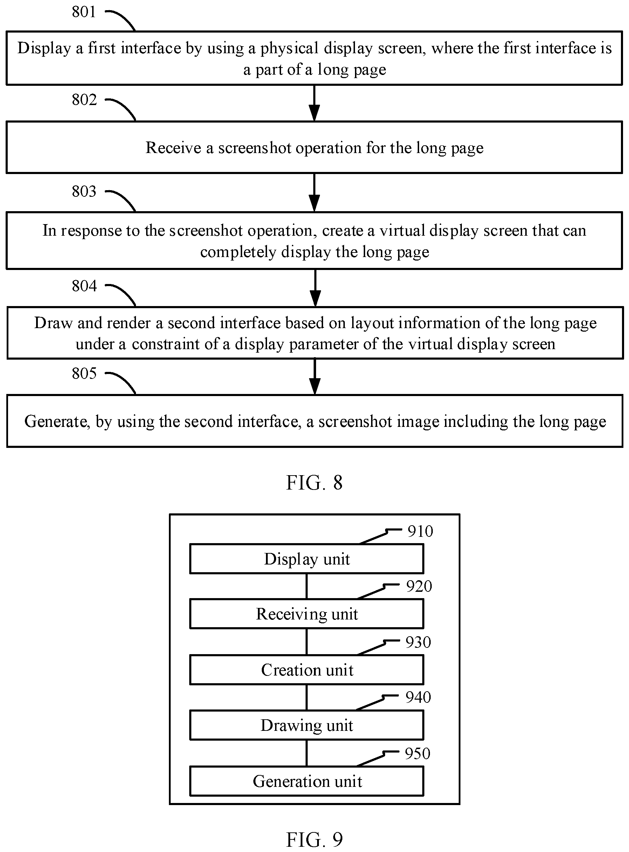

Based on the foregoing content, an embodiment of this application provides a long-page screenshot method. The method may be applied to an electronic device 100 having a physical display screen. Refer to FIG. 8. The method may include the following steps.

Step 801: Display a first interface by using the physical display screen, where the first interface is a part of a long page.

Step 802: Receive a screenshot operation for the long page.

Step 803: In response to the screenshot operation, create a virtual display screen that can completely display the long page.

Step 804: Draw and render a second interface based on layout information of the long page under a constraint of a display parameter of the virtual display screen.

Step 805: Generate, by using the second interface, a screenshot image including the long page. In some embodiments, the layout information includes at least one of the following:
a relative size between different layout elements on the long page, and a relative location between the different layout elements on the long page.

In one example of these embodiments, the creating a virtual display screen that can completely display the long page includes: creating a first virtual display screen; drawing and rendering a third interface based on the layout information under a constraint of a display parameter of the first virtual display screen; adjusting, when the third interface is a part of the long page, the display parameter of the first virtual display screen to obtain a second virtual display screen; drawing and rendering a fourth interface based on the layout information under a constraint of a display parameter of the second virtual display screen; and determining, when the long page is completely displayed in the fourth interface, that the second virtual display screen is the virtual display screen that can completely display the long page.

In an example of examples, the determining, when the long page is completely displayed in the fourth interface, that the second virtual display screen is the virtual display screen that can completely display the long page includes: when the long page is completely displayed in the fourth interface, and the fourth interface displays only the long page, determining that the second virtual display screen is the virtual display screen that can completely display the long page.

In another example of these embodiments, the drawing and rendering a second interface based on layout information of the long page under a constraint of a display parameter of the virtual display screen includes: determining that the fourth interface is the second interface.

In some embodiments, the layout information includes at least one of the following:
an aspect ratio of the long page and a size of the long page.

In an example of these embodiments, the creating a virtual display screen that can completely display the long page includes:
creating a virtual display screen having the aspect ratio of the long page or the size of the long page, to obtain the virtual display screen that can completely display the long page.

In some embodiments, the generating, by using the second interface, a screenshot image including the long page includes: storing the second interface in a preset image format, to obtain the screenshot image.

According to the long-page screenshot method provided in this embodiment of this application, the virtual screen that can completely display the long page at one moment is created, and the long page is redrawn based on the virtual screen. In this way, the complete screenshot image of the long page can be obtained through one capture.

Refer to FIG. 9. An embodiment of this application provides a long-page screenshot apparatus. The apparatus may be configured on an electronic device having a physical display screen, for example, an electronic device 100. As shown in FIG. 9, the apparatus includes:
a display unit 910, configured to display a first interface by using the physical display screen, where the first interface is a part of a long page;
a receiving unit 920, configured to receive a screenshot operation for the long page;
a creation unit 930, configured to: in response to the screenshot operation, create a virtual display screen that can completely display the long page;
a drawing unit 940, configured to draw and render a second interface based on layout information of the long page under a constraint of a display parameter of the virtual display screen; and
a generation unit 950, configured to generate, by using the second interface, a screenshot image including the long page.

For functions of functional units of the long-page screenshot apparatus provided in this embodiment of this application, refer to foregoing implementations of embodiments shown in FIG. 8. Details are not described herein again.

According to the long-page screenshot apparatus provided in this embodiment of this application, the virtual screen that can completely display the long page at one moment is created, and the long page is redrawn based on the virtual screen. In this way, the complete screenshot image of the long page can be obtained through one capture.

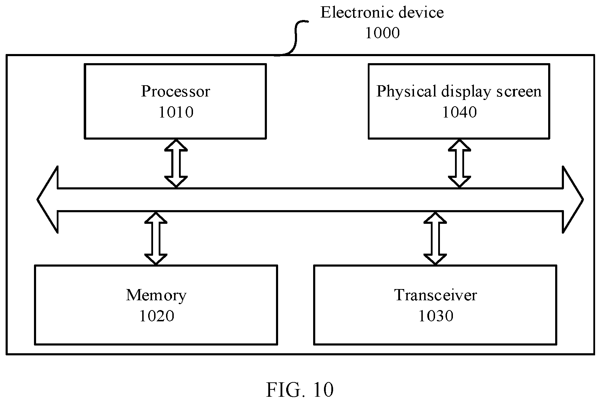

Refer to FIG. 10. An embodiment of this application provides an electronic device 1000. The electronic device 1000 may include a processor 1010, a memory 1020, a transceiver 1030, and a physical display screen 1040. The memory 1020 is configured to store computer instructions. When a computer program stored in the memory 1020 is executed by the processor 1010, the electronic device 1000 performs operations performed by the electronic device 100 in the foregoing method embodiments, for example, operations performed by the electronic device 100 in embodiment shown in FIG. 3A to FIG. 3C, FIG. 6, FIG. 7A and FIG. 7B, or FIG. 8. Specifically, the processor 1010 may perform a data processing operation.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

It may be understood that various numbers in embodiments of this application are merely used for differentiation for ease of description, and are not used to limit the scope of embodiments of this application.

## Claims

1. A long-page screenshot method, applied to an electronic device having a physical display screen, wherein the method comprises:
displaying a first interface by using the physical display screen, wherein the first interface is a part of a long page;
receiving a screenshot operation for the long page;
in response to the screenshot operation, creating a virtual display screen that is capable of displaying the long page completely;
drawing and rendering a second interface based on layout information of the long page under a constraint of a display parameter of the virtual display screen; and
generating, by using the second interface, a screenshot image comprising the long page.

2. The method according to claim 1, wherein the layout information comprises at least one of the following:
a relative size between different layout elements on the long page, and a relative location between the different layout elements on the long page.

3. The method according to claim 2, wherein the creating a virtual display screen that is capable of displaying the long page completely comprises:
creating a first virtual display screen;
drawing and rendering a third interface based on the layout information under a constraint of a display parameter of the first virtual display screen;
adjusting, when the third interface is a part of the long page, the display parameter of the first virtual display screen to obtain a second virtual display screen;
drawing and rendering a fourth interface based on the layout information under a constraint of a display parameter of the second virtual display screen; and
determining, when the long page is completely displayed in the fourth interface, that the second virtual display screen is the virtual display screen that is capable of displaying the long page completely.

4. The method according to claim 3, wherein the determining, when the long page is completely displayed in the fourth interface, that the second virtual display screen is the virtual display screen that is capable of displaying the long page completely comprises:
when the long page is completely displayed in the fourth interface, and the fourth interface displays only the long page, determining that the second virtual display screen is the virtual display screen that is capable of displaying the long page completely.

5. The method according to claim 3 or 4, wherein the drawing and rendering a second interface based on layout information of the long page under a constraint of a display parameter of the virtual display screen comprises:
determining that the fourth interface is the second interface.

6. The method according to claim 1, wherein the layout information comprises at least one of the following:
an aspect ratio of the long page and a size of the long page.

7. The method according to claim 6, wherein the creating a virtual display screen that is capable of displaying the long page completely comprises:
creating a virtual display screen having the aspect ratio of the long page or the size of the long page, to obtain the virtual display screen that is capable of displaying the long page completely.

8. The method according to claim 1, wherein the generating, by using the second interface, a screenshot image comprising the long page comprises:
storing the second interface in a preset image format, to obtain the screenshot image.

9. An electronic device, comprising a processor, a memory, a transceiver, and a physical display screen, wherein
the memory is configured to store computer instructions; and
when the electronic device runs, the processor executes the computer instructions, so that the electronic device performs the following operations:
displaying a first interface by using the physical display screen, wherein the first interface is a part of a long page;
receiving a screenshot operation for the long page;
in response to the screenshot operation, creating a virtual display screen that is capable of displaying the long page completely;
drawing and rendering a second interface based on layout information of the long page under a constraint of a display parameter of the virtual display screen; and
generating, by using the second interface, a screenshot image comprising the long page.

10. The electronic device according to claim 9, wherein the layout information comprises at least one of the following:
a relative size between different layout elements on the long page, and a relative location between the different layout elements on the long page.

11. The electronic device according to claim 10, wherein the processor executes the computer instructions, so that the electronic device further performs the following operations:
creating a first virtual display screen;
drawing and rendering a third interface based on the layout information under a constraint of a display parameter of the first virtual display screen;
adjusting, when the third interface is a part of the long page, the display parameter of the first virtual display screen to obtain a second virtual display screen;
drawing and rendering a fourth interface based on the layout information under a constraint of a display parameter of the second virtual display screen; and
determining, when the long page is completely displayed in the fourth interface, that the second virtual display screen is the virtual display screen that is capable of displaying the long page completely.

12. The electronic device according to claim 11, wherein the processor executes the computer instructions, so that the electronic device further performs the following operation:
when the long page is completely displayed in the fourth interface, and the fourth interface displays only the long page, determining that the second virtual display screen is the virtual display screen that is capable of displaying the long page completely.

13. The electronic device according to claim 11 or 12, wherein the processor executes the computer instructions, so that the electronic device further performs the following operation:
determining that the fourth interface is the second interface.

14. The electronic device according to claim 9, wherein the layout information comprises at least one of the following:
an aspect ratio of the long page and a size of the long page.

15. The electronic device according to claim 14, wherein the processor executes the computer instructions, so that the electronic device further performs the following operation:
creating a virtual display screen having the aspect ratio of the long page or the size of the long page, to obtain the virtual display screen that is capable of displaying the long page completely.

16. The electronic device according to claim 9, wherein the processor executes the computer instructions, so that the electronic device further performs the following operation:
storing the second interface in a preset image format, to obtain the screenshot image.

17. A long-page screenshot apparatus, comprising units configured to perform the method according to any one of claims 1 to 8.

18. A computer storage medium, comprising computer software instructions, wherein the computer software instructions comprise programs used to implement the method according to any one of claims 1 to 8.
